# EUROPÄISCHE PATENTANMELDUNG

(11) **EP 1 109 407 A1**
(43) Veröffentlichungstag der Anmeldung: **20.06.2001**
(21) Anmeldenummer: 99125288.3
(22) Anmeldetag: 18.12.1999
(51) Int. Cl.: H04N 7/16, H04N 5/44, H04N 7/088

(54) **Verfahren und Empfangsgerät zur Übertragung und Wiedergabe von Audio- oder Videoprogrammen**

(71) Anmelder: Günaydin, Turhan, 33647 Bielefeld (DE); Arayan, Sülayman, 56068 Koblenz (DE)
(72) Erfinder: Günaydin, Turhan, 33647 Bielefeld (DE); Arayan, Sülayman, 56068 Koblenz (DE)
(74) Vertreter: Wiebusch, Manfred

(57) **Zusammenfassung**

Verfahren zur Übertragung von Audio- oder Videoprogrammen von mindestens einem Sender (18; 58) zu mindestens einem Empfänger (10) und zur Wiedergabe der Programme auf Seiten des Empfängers, bei dem in Pausen zwischen Programmblöcken (22, 24; 44, 46) des Hauptprogramms mindestens ein Nebenprogramm wiedergegeben wird, dadurch gekennzeichnet, daß mehrere Nebenprogramme (30, 32, 36; 42; 54, 56; 62) gesendet werden und auf Seiten des Empfängers (10) ein Code (34, 38) empfangen oder erzeugt wird, der Beginn und Ende der Programmblöcke des Hauptprogramms anzeigt, und anhand dieses Codes in den Pausen automatisch auf ein vom Empfänger gewähltes Nebenprogramm umgeschaltet wird.

## Beschreibung

Die Erfindung betrifft ein Verfahren zur Übertragung von Audio- oder Videoprogrammen von mindestens einem Sender zu mindestens einem Empfänger und zur Wiedergabe der Programme auf Seiten des Empfängers, bei dem in Pausen zwischen Programmblöcken eines Hauptprogramms mindestens ein Nebenprogramm wiedergegeben wird. Weiterhin betrifft die Erfindung ein Empfangsgerät zur Durchführung dieses Verfahrens.

Bei dem Hauptprogramm kann es sich beispielsweise um ein Programm handeln, das von einem privaten oder öffentlich-rechtlichen Fernsehsender im UHF-oder VHF-Band, über Kabel oder über Satellit verbreitet wird. Bei dem Nebenprogramm handelt es sich dann um Werbeblöcke, die die Blöcke des Hauptprogramms unterbrechen.

Von Rundfunk- und Fernsehteilnehmern werden die Programmunterbrechungen durch Werbeblöcke weithin akzeptiert, weil die Werbung ein wesentliches Instrument zur Finanzierung der Hauptprogramme darstellt. Es besteht auf Seiten der Empfänger auch durchaus Interesse an den in den Werbeprogrammen enthaltenen Informationen. Häufig ist es jedoch so, daß die Werbeblöcke sich zu einem großen Teil auf Produkte beziehen, an denen der einzelne Empfänger kein Interesse hat. Dies ist nicht nur aus der Perspektive der Rundfunk- und Fernsehteilnehmer unbefriedigend, sondern auch aus der Sicht der Werbewirtschaft, weil die Werbung für ein bestimmtes Produkt im allgemeinen wesentlich effektiver ist, wenn sie sich gezielt an die Zuschauer richtet, die im Prinzip ein Interesse an dem angebotenen Produkt haben. Generell wäre es deshalb wünschenswert, die Werbung nach Interessensgebieten zu ordnen und dem Empfänger selbst die Wahl zu überlassen, für welche Interessengebiete er Werbung empfangen möchte.

Aufgabe der Erfindung ist es, ein Verfahren und ein Empfangsgerät zu schaffen, das dies technisch ermöglicht.

Diese Aufgabe wird bei dem erfindungsgemäßen Verfahren dadurch gelöst, daß mehrere Nebenprogramme gesendet werden und auf Seiten des Empfängers ein Code empfangen oder erzeugt wird, der Beginn und Ende der Programmblöcke des Hauptprogramms anzeigt, und anhand dieses Codes in den Pausen automatisch auf ein vom Empfänger gewähltes Nebenprogramm umgeschaltet wird.

Die verschiedenen Nebenprogramme enthalten dann Werbesendungen für unterschiedliche Interessensgebiete. Jeder Empfänger kann an seinem Empfangsgerät in Abhängigkeit von seinen individuellen Interessen das gewünschte Nebenprogramm auswählen. Wenn dann das laufende Hauptprogramm von einem Werbeblock unterbrochen wird, so wird dies anhand des Codes automatisch erkannt, und es wird auf das gewählte Nebenprogramm umgeschaltet. Sobald das Hauptprogramm fortgesetzt wird, wird wieder automatisch auf das Hauptprogramm zurückgeschaltet.

Unterschiedliche technische Realisierungen der Empfangsgeräte, mit denen dieses Verfahren durchführbar ist, sind Gegenstand der Vorrichtungsansprüche.

Vorteilhafte Ausgestaltungen der Erfindung ergeben sich aus den Unteransprüchen.

Der Code, der Beginn und Ende der Hauptprogrammblöcke anzeigt, kann im einfachsten Fall zusammen mit dem Hauptprogrammsignal vom Sender des Hauptprogramms gesendet werden. Wahlweise kann dieser Code jedoch auch von demselben Sender oder einem anderen Sender auf einem separaten Telekommunikationskanal, beispielsweise über das Telefonnetz, übermittelt werden. Schließlich ist es auch möglich, daß dieser Code im Empfangsgerät automatisch anhand des Hauptprogrammsignals generiert wird. Dabei wird der Umstand ausgenutzt, daß sich das Programmsignal für Werbeblöcke in charakteristischer Weise vom Programmsignal des Hauptprogramms unterscheidet, beispielsweise durch spezielle Einleitungssequenzen, die am Beginn jedes Werbeblockes gesendet werden, spezielle Einblendungen bei Wiederaufnahme des Hauptprogramms, durch das Auftreten von Produktnamen in schriftlicher oder sprachlicher Form in den Werbespots oder auch durch das Vorhandensein oder Nichtvorhandensein eines senderspezifischen Logos, das während des Hauptprogramms in der Bildschirmecke eingeblendet wird. Anhand dieser Kriterien kann der Code mit Hilfe elektronischer Bild- oder Tonverarbeitung aus dem vom Sender empfangenen Signal extrahiert werden.

Die verschiedenen Nebenprogramme können vom Sender des Hauptprogramms jeweils während der Pausen zwischen den Hauptprogrammblöcken parallel gesendet werden. In diesem Fall ist jedoch während der Werbeblöcke eine deutlich höhere Bandbreite als während der Hauptprogrammblöcke erforderlich.

Eine mögliche Lösung dieses Problems besteht darin, daß die Nebenprogramme zeitversetzt und parallel zu den Hauptprogrammblöcken gesendet werden, so daß über die gesamte Sendezeit eine gleichmäßigere Ausnutzung der verfügbaren Bandbreite ermöglicht wird. Die empfangenen Nebenprogramme werden dann im Empfangsgerät zwischengespeichert und in den Pausen zwischen den Hauptprogrammblöcken wiedergegeben. Da nur die vom jeweiligen Benutzer gewählten Nebenprogramme gespeichert zu werden brauchen, bleibt die benötigte Speicherkapazität in vertretbaren Grenzen. Die Übermittlung der Nebenprogramme kann, für den Benutzer unsichtbar, verschachtelt während der Übertragung des Hauptprogrammsignals erfolgen, wie es beispielsweise auch mit Videotext-Daten geschieht. Bei analogem Fernsehempfang können beispielsweise die Zeilen- und Bildaustastlücken für die Übermittlung des Nebenprogrammsignals genutzt werden. Da die Zwischenspeicherung der Nebenprogramme zweckmäßigerweise in digitaler Form erfolgt, ist es sinnvoll, diese Nebenprogramme auch in digitaler Form zu übermitteln, so daß gängige Datenkompressionsverfahren genutzt werden können. Besonders effizient ist dieses Verfahren bei Werbebeiträgen, die einen relativ hohen Anteil statischer Elemente aufweisen, z.B. Einzelbilder, und dementsprechend eine hohe Datenkompression ermöglichen. Für die Übermittlung der Nebenprogrammdaten kann auch auf die bekannten Internet-Datenübertragungsprotokolle zurückgegriffen werden.

Eine andere Möglichkeit, die vorhandene Bandbreite besser auszunutzen, bietet sich dann, wenn ein Sender oder ein Verbund von Sendern mehrere Hauptprogramme parallel ausstrahlt. In diesem Fall ist es möglich, die Werbeblöcke in den einzelnen Hauptprogramme zeitlich so zu versetzen, daß sie einander nicht überlappen. Parallel zu den Hauptprogrammen werden dann auf zusätzlichen Kanälen mehrere Werbeblöcke übertragen, die jedesmal wiederholt werden, wenn eines der Hauptprogramme unterbrochen ist. Unabhängig davon, welches Hauptprogramm der Benutzer sieht, steht dann in der Pause zwischen den Hauptprogrammblöcken die gesamte Palette der Nebenprogramme zur Auswahl, und anhand des Codes wird für die Dauer des Werbeblockes automatisch auf den Kanal umgeschaltet, der das gewünschten Nebenprogramm sendet.

Weiterhin ist es denkbar, daß die Nebenprogramme von verschiedenen Anbietern zur Verfügung gestellt und auf unterschiedlichen Kanälen zum Empfänger übermittelt werden. Die Übermittlung der Nebenprogrammdaten kann dann beispielsweise auch über das Telefonnetz, über das Internet oder auch auf Speichermedien wie CD oder CVD erfolgen, die vom Nebenprogrammanbieter zur Verfügung gestellt werden. Der Code zum Umschalten zwischen Haupt- und Nebenprogramm kann wahlweise vom Sender des Hauptprogramms oder vom Anbieter des Nebenprogramms übermittelt werden. Im letzteren Fall kann dies beispielsweise über das Telefonnetz geschehen, etwa unter Ausnutzung der bei ISDN-Anschlüssen möglichen automatischen Rufnummernerkennung.

Im folgenden werden Ausführungsbeispiele der Erfindung anhand der Zeichnung näher erläutert.

### Es zeigen:

- Fig. 1: ein Blockdiagramm zur Illustration eines Verfahrens gemäß einer ersten Ausführungsform der Erfindung;
- Fig. 2: ein Blockdiagramm zur Illustration der Wiedergabe der nach dem Verfahren gemäß Figur 1 übermittelten Daten auf Seiten des Empfängers; und
- Fig. 3 und 4: Blockdiagramme zu anderen Ausführungsformen der Erfindung.

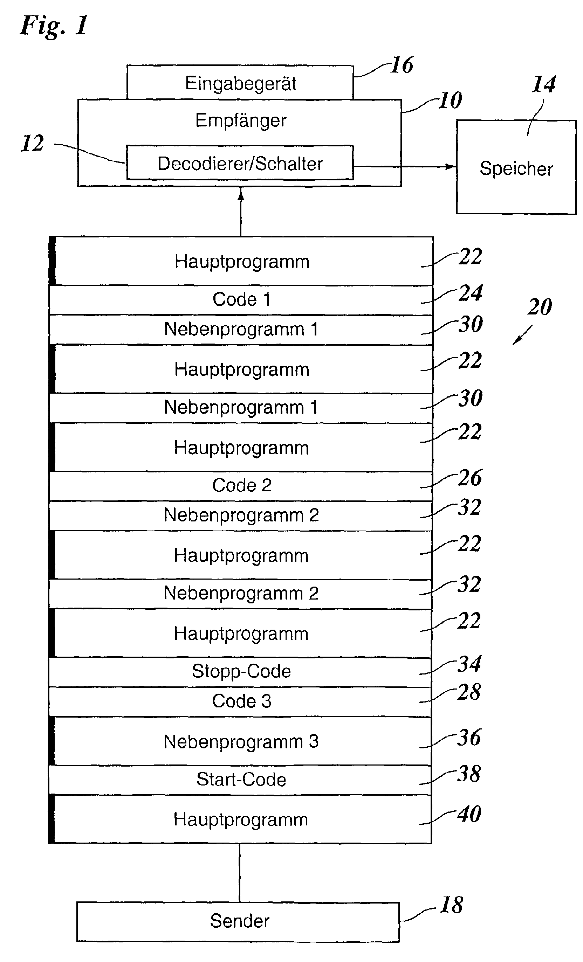

In Figur 1 ist als Block ein Empfänger 10 dargestellt, bei dem es sich beispielsweise um einen üblichen Fernsehempfänger oder eine Kombination aus Fernsehempfänger und Digitaldecoder handeln kann. Als zusätzliche Komponenten sind auf Seiten des Empfängers ein Decodierer/Schalter 12 und ein Speicher 16 vorgesehen. Diese zusätzlichen Komponenten sind entweder in den Empfänger 10 integriert oder als separates Zusatzgerät ausgebildet, das ähnlich wie ein Videorecorder über ein Antennenkabel mit dem Fernsehempfänger verbunden ist. Wahlweise kann das Zusatzgerät auch mit einem digitalen oder analogen Videorecorder kombiniert sein. Ein zugehöriges Eingabegerät 16, beispielsweise eine Fernbedienung für den Fernsehempfänger. ist so ausgebildet, daß auch die zusätzlichen Komponenten über dieses Eingabegerät angesprochen werden können. Wahlweise kann es sich bei den zusätzlichen Komponenten und dem Eingabegerät auch um einen Computer handeln, der den Bildschirm des Fernsehempfängers als Monitorbildschirm nutzt.

Ein Sender 18, beispielsweise ein kommerzieller Fernsehsender, strahlt eine Programmsequenz 20 aus, die u.a. von dem Empfänger 10 empfangen wird. Die Programmsequenz 20 besteht aus einer Folge von Signalsequenzen, die in der Reihenfolge von oben nach unten in Figur 1 vom Empfänger 10 empfangen werden. Im gezeigten Beispiel ist die erste Signalsequenz ein Teil eines Hauptprogrammblockes 22, beispielsweise eines Spielfilms. In diesem Hauptprogrammblock 22 sind Codesequenzen 24, 26 und Nebenprogrammsequenzen 30, 32 verschachtelt. Diese Code- und Nebenprogrammsequenzen sind so in dem Hauptprogrammsignal, beispielsweise in den jeweiligen Austastlücken, untergebracht, daß sie den Empfang des Hauptprogramms nicht stören und auf dem Bildschirm des Empfängers nicht sichtbar sind. Signalsequenzen, die auf dem Bildschirm des Empfängers gesehen werden können. sind in Figur 1 durch einen schwarzen Balken am linken Rand des jeweiligen Blockes kenntlich gemacht.

Die Codesequenz 24 signalisiert, daß die nachfolgenden Nebenprogrammsequenzen 30 zu einem ersten Nebenprogramm (Nebenprogramm 1) gehören. Entsprechend signalisiert die Codesequenz 26, daß die darauffolgenden Nebenprogrammsequenzen 32 zu einem zweiten Nebenprogramm (Nebenprogramm 2) gehören. Bei diesen Nebenprogrammen handelt es sich beispielsweise um Werbeblöcke für unterschiedliche Interessensgebiete. Die in das Hauptprogramm eingestreuten Nebenprogrammsequenzen 30 und 32 sind jeweils relativ kurz und müssen nachträglich zu einem längeren, wiedergebbaren Programmblock zusammengesetzt werden. Im gezeigten Beispiel besteht das vollständigen Nebenprogramm 1 nur aus zwei Nebenprogrammsequenzen 30 und das vollständige Nebenprogramm 2 nur aus zwei Nebenprogrammsequenzen 32. In der Praxis ist die Anzahl der Nebenprogrammsequenzen, die zusammen ein vollständiges Nebenprogramm bilden, jedoch wesentlich größer.

Ein Stop-Code 34 signalisiert das Ende des Hauptprogrammblockes. Darauf folgt eine Codesequenz 28, die anzeigt, daß die danach gesendete Nebenprogrammsignalsequenz 36 zu einem dritten Nebenprogramm (Nebenprogramm 3) gehört. Dieses Nebenprogramm ist nicht in ein Hauptprogramm verschachtet, sondern kann direkt empfangen werden.

Ein Start-Code 38 signalisiert das Ende des Nebenprogramms 3 und den Beginn des nächsten Hauptprogrammblockes 40.

Der Decodierer/Schalter 12 analysiert die empfangenen Signale und leitet in jedem Fall das Hauptprogramm an den eigentlichen Fernsehempfänger weiter. Mit Hilfe des Eingabegerätes 16 kann der Benutzer eines der drei Nebenprogramme wählen. Wenn der Decodierer/Schalter 12 die Codesequenz 24 empfängt, so überprüft er, ob der Benutzer das Nebenprogramm 1 gewählt hat. Wenn dies der Fall ist, werden die nachfolgenden Nebenprogrammsequenzen 30 in den Speicher 14 weitergeleitet und dort gespeichert. Wenn der Benutzer ein anderes Nebenprogramm gewählt hat, werden die Nebenprogrammsequenzen 30 ignoriert. Entsprechend werden die Nebenprogrammsequenzen 32 für das Nebenprogramm 2 nur dann im Speicher 14 abgelegt, wenn der Benutzer das Nebenprogramm 2 gewählt hat. Der Stop-Code 34 signalisiert dem Decodierer/Schalter, daß er auf die Codesequenz 28 anders reagieren muß als auf die während des Hauptprogramms empfangenen Codesequenzen 24 und 26. Beim Empfang der Codesequenz 28 wird überprüft, ob der Benutzer das Nebenprogramm 3 gewählt hat. Wenn dies der Fall ist, wird das Nebenprogrammsignal jedoch nicht gespeichert, sondern direkt an den Fernsehempfänger weitergeleitet, so daß der Benutzer in der Pause zwischen den Hauptprorgrammblöcken 22 und 40 das Nebenprogramm 3 sieht. Wenn der Benutzer dagegen das Nebenprogramm 1 oder 2 gewählt hat, so wird auf die Codesequenz 28 hin die Weiterleitung des Nebenprogramms 3 unterdrückt, und stattdessen wird das gewählte Nebenprogramm aus dem Speicher 14 abgerufen und zur Wiedergabe an den Fernsehempfänger weitergeleitet. Somit sieht der Benutzer dann anstelle des Nebenprogramms 3 das von ihm gewünschte Nebenprogramm 1 oder 2.

Der Decodierer/Schalter 12 überwacht unterdessen die vom Sender 18 eintreffenden Signale. Bei Eintreffen des Start-Codes 38 wird die Wiedergabe des Nebenprogramms aus dem Speicher 14 unterbrochen und die Wiedergabe des Hauptprogramms mit dem Block 40 fortgesetzt.

Der oben beschriebene Zyklus kann sich dann bei der nächsten Pause zwischen Hauptprogrammblöcken wiederholen.

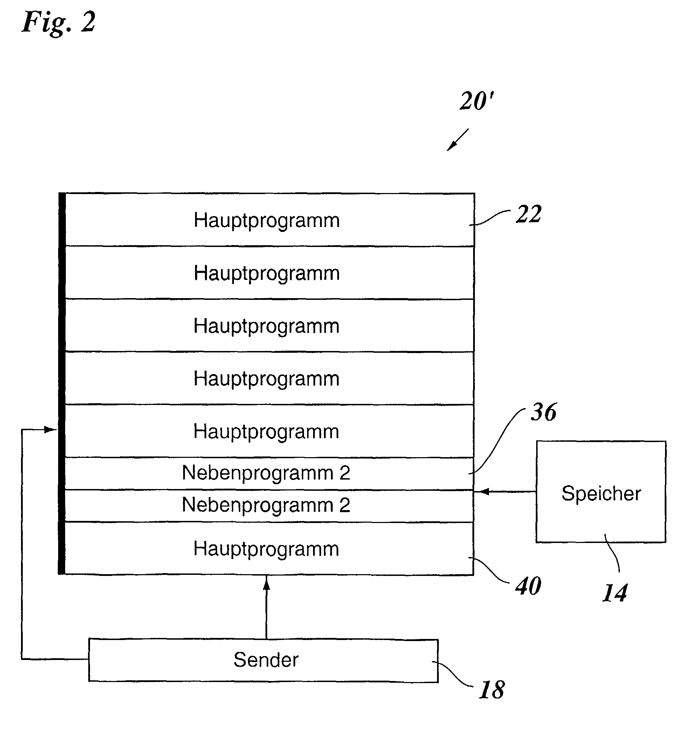

Figur 2 zeigt eine Programmsequenz 20', die aus der in Figur 1 dargestellten Programmsequenz 20 abgeleitet ist und dem Programm entspricht, das der Benutzer tatsächlich auf dem Bildschirm sieht, wenn er das Nebenprogramm 2 gewählt hat. Das Wiedergabesignal für die Hauptprogrammböcke 22 und 40 stammt direkt vom Sender 18, während das Wiedergabesignal für das aus mehreren Nebenprogrammsequenzen zusammengesetzte Nebenprogramm 2 aus dem Speicher 14 stammt.

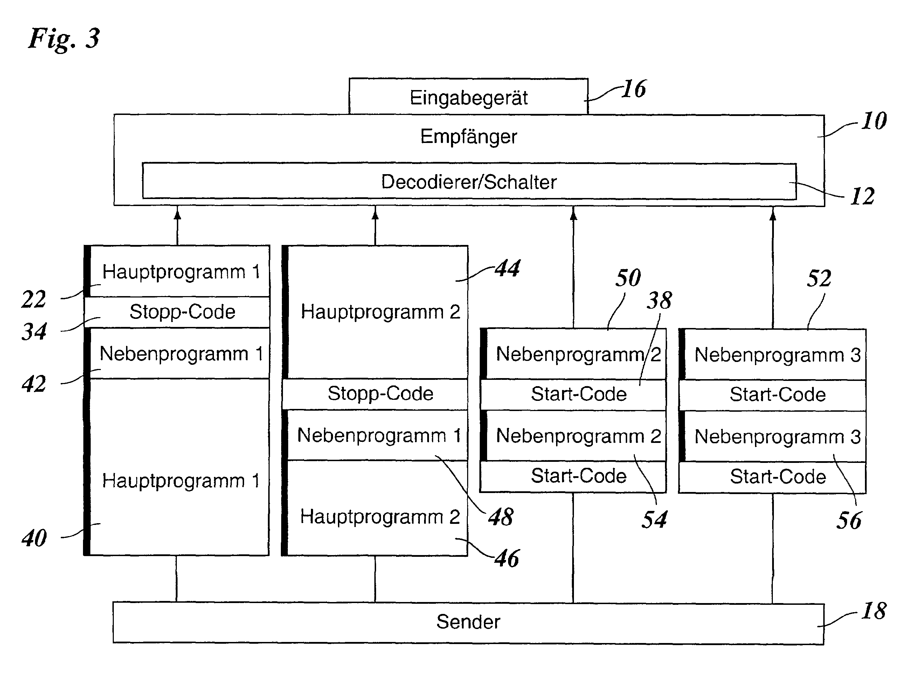

Figur 3 illustriert eine Ausführungsform des Verfahrens, bei der der Sender 18 gleichzeitig mehrere Programme ausstrahlt. Im gezeigten Beispiel werden vier verschiedene Programme auf vier verschiedenen Kanälen ausgestrahlt. Das auf dem ersten Kanal ausgestrahlte Programm besteht aus Hauptprogrammblöcken 22 und 40 eines ersten Hauptprogramms (Hauptprogramm 1), zwischen denen ein Nebenprogrammblock 42 eingeschoben ist. Das Ende des ersten Hauptprogrammblockes 22 wird wieder durch den Stop-Code 34 angezeigt. Auf dem zweiten Kanal läuft gleichzeitig ein zweites Hauptprogramm (Hauptprogramm 2) mit den Hauptprogrammblöcken 44 und 46 und einem eingeschobenen Nebenprogrammblock 48. Auch hier wird der erste Hauptprogrammblock 44 durch den Stop-Code abgeschlossen. Die Nebenprogramme in den Blöcken 42 und 48 sind identisch, sind jedoch zeitlich so versetzt, daß sie sich nicht überlappen.

Auf jedem der beiden übrigen Kanäle läuft ein weiteres Nebenprogramm (Nebenprogramm 2 bzw. Nebenprogramm 3). Die Nebenprogrammblöcke 50 und 52 auf dem dritten und vierten Kanal werden zeitgleich mit dem Nebenprogrammblock 42 auf dem ersten Kanal ausgestrahlt und werden jeweils mit dem Start-Code 38 beendet. Die Nebenprogrammblöcke 54 und 56 werden zeitgleich mit dem Nebenprogrammblock 48 ausgestrahlt und sind ebenfalls durch den Start-Code abgeschlossen. Inhalt jedes der Nebenprogrammblöcke 54 und 56 ist eine Wiederholung des Nebenprogramms aus dem vorangegangnen Nebenprogrammblock 50 bzw. 52.

Es versteht sich, daß auf weiteren Kanälen zusätzliche Nebenprogramme jeweils zeitgleich mit den Nebenprogrammen auf den Kanälen 3 und 4 laufen können. Ebenso können auf weiteren Kanälen zusätzliche Hauptprogramme laufen, mit Nebenprogrammblöcken, die gegenüber den Nebenprogrammblöcken 42 und 48 zeitversetzt sind.

Wie bei der ersten Ausführungsform wählt der Benutzer mit Hilfe des Eingabegerätes 16 eines der gewünschten Nebenprogramme aus. Der Fernsehempfänger wird wie gewohnt auf den Kanal eingestellt, auf dem das gewünschte Hauptprogramm läuft. Das eingehende Signal läuft jedoch durch den Decodierer/Schalter 12, der dieses Signal auf das Auftreten des Stop-Codes 34 überwacht. Wenn beispielsweise das Hauptprogramm 1 gewählt wurde, so tritt der Stop-Code 34 im Anschluß an den Hauptprogrammblock 22 auf. Der Decodierer/Schalter 12 überprüft daraufhin, welches Nebenprogramm durch den Benutzer gewählt wurde. Wenn dies das Nebenprogramm 1 ist, bleibt die Kanalwahl unverändert, so daß der Benutzer auf demselben Kanal den Nebenprogrammblock 42 empfängt. Wurde dagegen vom Benutzer das Nebenprogramm 2 oder 3 gewählt, so wird unmittelbar im Anschluß an den Stop-Code 34 auf den betreffenden Kanal umgeschaltet. Sobald der Decodierer/Schalter den Start-Code 38 empfängt, wird wieder auf den gewählten Hauptprogrammkanal zurückgeschaltet.

Wenn der Benutzer das Hauptprogramm 2 gewählt hat, ergibt sich im Prinzip derselbe Ablauf, nur mit dem Unterschied, daß das gewünschte Nebenprogramm zwischen den Hauptprogrammblöcken 44 und 46 wiedergegeben wird.

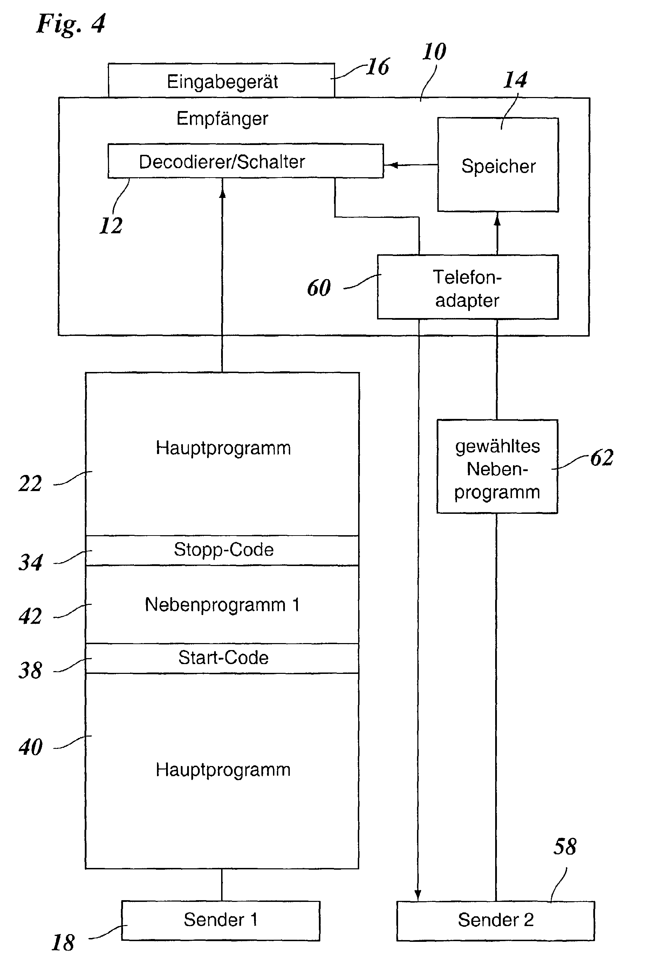

Figur 4 zeigt eine weitere Variante des Verfahrens, bei der der Sender 18 (Sender 1) nur ein Hauptprogramm mit den Blöcken 22 und 40 und ein einziges Nebenprogramm (Nebenprogramm 1) sendet. Das Nebenprogramm läuft in einem Nebenprogrammblock 42, der zwischen den Hauptprogrammblöcken 22 und 40 eingefügt und durch den Start-Code 34 und den Stop-Code 38 eingerahmt ist. Weitere Nebenprogramme werden in diesem Fall von einem zweiten Sender 58 (Sender 2) bereitgestellt.

Im gezeigten Beispiel kommuniziert der Sender 58 mit dem Empfänger 10 über ein Telefonnetz. In den Empfänger 10 bzw. das betreffende Zusatzgerät ist deshalb ein Telefonadapter 60 integriert.

Der Benutzer wählt über das Eingabegerät 16 das gewünschte Nebenprogramm. Falls es sich dabei nicht um das vom Sender 18 gelieferte Nebenprogramm 1 handelt, wird der Programmwunsch über den Telefonadapter 60 an den Sender 58 übermittelt, der daraufhin das gewünschte Nebenprogramm 62 in den Speicher 14 des Empfängers überträgt. Der Stop-Code 34 veranlaßt den Decodierer/ Schalter 12, das Nebenprogramm 1 auszublenden und stattdessen das im Speicher 14 vorhandene Nebenprogramm an den Fernsehempfänger zu übertragen. Das Signal des Senders 18 wird vom Decodierer /Schalter 12 weiterhin überwacht, und auf den Start-Code 38 hin wird wieder auf den Sender 18 zurückgeschaltet.

In die Hauptprogrammblöcke 22 und 40 können bei dieser Ausführungsform nicht gezeigte Verschleierungscodes eingestreut sein, die dasselbe Datenformat wieder Stop-Code 34 und der Start-Code 38 haben. Diese Verschleierungscodes sowie der Stop-Code und der Start-Code sind nach einem geheimen Schlüssel verschlüsselt, der dem Betreiber des zweiten Senders 58 gegen Gebühr zur Verfügung gestellt wird. Vom Sender 58 wird dieser Code in den Speicher 14 geladen, so daß der Decodierer/Schalter 12 die vom Sender 18 empfangenen Codes entschlüsseln und so den echten Stop-Code 34 und den echten Start-Code 38 von den Verschleierungscodes unterscheiden kann. Auf diese Weise ist sichergestellt, daß das vom Sender 18 ausgestrahlte Nebenprogramm 1 nur gegen Nebenprogramme des Senders 58 ausgetauscht werden kann, wenn der Betreiber des Senders 58 hierzu autorisiert wurde.

## Patentansprüche

1. Verfahren zur Übertragung von Audio- oder Videoprogrammen von mindestens einem Sender (18; 58) zu mindestens einem Empfänger (10) und zur Wiedergabe der Programme auf Seiten des Empfängers, bei dem in Pausen zwischen Programmblöcken (22, 24; 44, 46) des Hauptprogramms mindestens ein Nebenprogramm wiedergegeben wird, dadurch **gekennzeichnet**, daß mehrere Nebenprogramme (30, 32, 36; 42; 54, 56; 62) gesendet werden und auf Seiten des Empfängers (10) ein Code (34, 38) empfangen oder erzeugt wird, der Beginn und Ende der Programmblöcke des Hauptprogramms anzeigt, und anhand dieses Codes in den Pausen automatisch auf ein vom Empfänger gewähltes Nebenprogramm umgeschaltet wird.

2. Verfahren nach Anspruch 1, dadurch **gekennzeichnet**, daß der Code (34, 38) von dem Sender (18) gesendet wird, der auch das Hauptprogramm sendet.

3. Verfahren nach Anspruch 2, dadurch **gekennzeichnet**, daß der Code (34, 38) auf Seiten des Empfängers (18) verschlüsselt und auf Seiten des Empfängers (10) entschlüsselt wird.

4. Verfahren nach Anspruch 1, dadurch **gekennzeichnet**, daß der Code (34, 38) von einem Sender (58) gesendet wird, der eines der mehreren Nebenprogramme sendet und mit dem Empfänger (10) über einen anderen Kommunikationskanal kommuniziert als der Sender (18), der das Hauptprogramm sendet.

5. Verfahren nach Anspruch 1, dadurch **gekennzeichnet**, daß der Code (36, 38) auf Seiten des Empfängers durch digitale Signalverarbeitung des vom Sender (18) gesendeten Signals erzeugt wird.

6. Verfahren nach einem der vorstehenden Ansprüche, dadurch **gekennzeichnet,** daß mindestens ein Teil eines der Nebenprogramme (30, 32; 62) auf Seiten des Empfängers (10) zwischengespeichert und dann in der Pause zwischen den Blöcken (22, 40) des Hauptprogramms aus dem Speicher (14) abgerufen wird.

7. Verfahren nach Anspruch 6, dadurch **gekennzeichnet**, daß das für die Zwischenspeicherung vorgesehene Nebenprogramm (30, 32) zusammen mit dem Hauptprogramm gesendet und auf Seiten des Empfängers (10) aus dem empfangenen Signal extrahiert und dem Speicher (14) zugeleitet wird.

8. Verfahren nach Anspruch 6, dadurch **gekennzeichnet**, daß das für die Zwischenspeicherung vorgesehene Nebenprogramm (62) über ein Datennetz oder auf einem Speichermedium an den Empfänger (10) übermittelt wird.

9. Verfahren nach Anspruch 2, dadurch **gekennzeichnet**, daß der Sender (18) zeitgleich auf verschiedenen Kanälen mehrere Hauptprogramme (22, 40; 44, 46) und auf weiteren Kanälen zusätzliche Nebenprogrammblöcke (50, 52, 54, 56) ausstrahlt, wobei die Ausstrahlung der Nebenprogrammblöcke jeweils zeitgleich mit einer Pause zwischen den Programmblöcken (22, 40; 44, 46) eines der Hauptprogramme erfolgt, und daß der Empfänger (10) bei Empfang eines Codes (34), der an das Ende eines Hauptprogrammblockes (22; 44) angehängt ist, auf den Kanal mit dem gewünschten Nebenprogramm wechselt und bei Empfang eines Codes (38), der an das betreffende Nebenprogramm angehängt ist, auf den Kanal mit dem ursprünglichen Hauptprogramm zurückschaltet.

10. Empfangsgerät zur Durchführung des Verfahrens nach Anspruch 1, mit einem Empfänger (10) zum Empfang von Video- oder Audioprogrammen von einem Sender (18), **gekennzeichnet** durch eine Schalteinheit (12) zum Erkennen oder Erzeugen eines Stop-Codes (34), der das Ende eines Hauptprogrammblokkes (22) anzeigt, zum Erkennen oder Erzeugen eines Start-Codes (38), der den Beginn des nächsten Hauptprogrammblockes anzeigt, und zum Umschalten auf das gewünschte Nebenprogramm bei Auftreten des Stop-Codes und zum Zurückschalten auf das Hauptprogramm bei Aufteten des Start-Codes.

11. Empfangsgerät nach Anspruch 10, **gekennzeichnet** durch einen Speicher (14) zur Zwischenspeicherung mindestens eines Nebenprogramms.

12. Empfangsgerät nach Anspruch 10 oder 11, **gekennzeichnet** durch einen Telefonadapter (60) zum Empfang des Start-Codes (34) und des Stopp-Codes (38) und/oder mindestens eines Nebenprogramms (62).
